# EUROPÄISCHE PATENTSCHRIFT

(11) **EP 1 170 511 B1**
(45) Veröffentlichungstag und Bekanntmachung des Hinweises auf die Patenterteilung: **23.01.2008**
(21) Anmeldenummer: 01111847.8
(22) Anmeldetag: 16.05.2001
(51) Int. Cl.: F15B 15/26

(54) **Feststelleinrichtung**
Locking device
Dispositif de verrouillage

(30) Priorität: 07.07.2000 DE 10033128
(43) Veröffentlichungstag der Anmeldung: 09.01.2002
(73) Patentinhaber: Frenotech Establishment, 9494 Schaan (LI)
(72) Erfinder: Mainardi, Gianfranco, 9434 Au (CH)
(74) Vertreter: Säger, Manfred

(56) Entgegenhaltungen:
- EP-A- 0 446 694
- WO-A-00/74892
- DE-A1- 3 810 388
- DE-C1- 19 543 471

## Beschreibung

Die Erfindung betrifft eine Feststelleinrichtung gemäß dem Oberbegriff des Hauptanspruches, insbesondere zum Feststellen mindestens einer eine gegebene Achsrichtung sowie einen gegebenen Durchmesser aufweisenden Achse, beispielsweise mindestens einer fest angeordneten Stange oder mindestens einer sich drehenden Welle, mit mindestens zwei entgegen der Kraft mindestens einer Feder betätigbaren Klemmbacken, die in einem Gehäuse angeordnet sind, mit mindestens einem über ein Fluid in einem Kolbenraum betätigbaren Betätigungskolben, mit mindestens einem von diesem bewegbaren Betätigungsglied zum Angriff an dem einen freien Ende der Klemmbacken zu deren Bewegen voneinander weg oder aufeinander zu um mindestens ein den Klemmbacken zugeordnetes Kipplager von einer Feststellage in eine Freigabelage für die Achse und mit einem Klemmbereich zum kraftschlüssigen Angriff an der Achse in der Feststellage im Bereich des Kipplagers der Klemmbacken, wobei sich die Kippachse des Kipplagers im wesentlichen parallel zur Achsrichtung der Achse erstreckt und wobei der Klemmbereich in der Feststellage zur flächig, linienförmig und/oder punktuell klemmenden Anlage an der Oberfläche der Achse unter deren gleichzeitiger spielfreier Zentrierung bzw. Festlegung ausgebildet ist.

Eine derartige Feststelleinrichtung ist aus DE 3810388 bekannt.

Eine solche Feststelleinrichtung weist nicht nur die Eigenschaft des spielfreien Klemmens auf, sondern erbringt darüber hinaus auch große Klemmkräfte.

Der Erfindung liegt die Aufgabe zugrunde, bei einer gattungsgemäßen Einrichtung gemäß dem Oberbegriff des Hauptanspruchs die Klemmkräfte insbesondere in axialer Richtung zu vergrößern.

Diese Aufgabe wird bei einer gattungsgemäßen Feststelleinrichtung gemäß dem Oberbegriff des Hauptanspruches erfindungsgemäß durch dessen kennzeichnende Merkmale gelöst.

Mit dieser Ausbildung ist sichergestellt, daß bei axialer Belastung der Feststelleinrichtung die Klemmbacken mit ihrer Rückseite an der inneren Wandung der Sackbohrung rechtwinklig zu deren Erstreckung längs des Bogens bewegt werden, wodurch eine zusätzliche, nach innen gerichtete resultierende Kraft auf die Klemmbacken bewirkt wird, die eine größere Haltekraft des Klemmbereichs an der Achse in überraschend einfacher Weise zur Folge haben.

Vorzugsweise ist der Bogen ein Kreisbogen und entspricht der Durchmesser der Sackbohrung genau dem Durchmesser des Kreisbogens. Somit ist eine besonders einfache Herstellung möglich.

In zweckmäßiger Ausgestaltung der Erfindung ist das Betätigungsglied als Hülse ausgebildet und weist in deren innerem Bereich abgeschrägte Steuerflächen auf, welche mit den freien Enden der Klemmbacken zusammenwirken. Hierbei sind die vorabgeschrägten Steuerflächen mit Vorzug von einer konischen Innenfläche des Betätigungsgliedes gebildet, deren Durchmesser sich in Richtung auf den Betätigungskolben vergrößert, wodurch bei Beaufschlagung des Betätigungskolbens mit einem unter Druck stehenden Fluid sich die freien Enden der Klemmbacken zum Zwecke des Lösens der Klemmung auseinanderbewegen können und bei Belüften des Kolbenraums der Feststelleinrichtung die freien Enden der Klemmbacken an der konischen Innenfläche geführt aufeinander zubewegt werden und hierbei die Klemmung an der Achse infolge einer Zurückbewegung des Kolbens aufgrund der Kraft einer Feder bewirkt.

In bevorzugter Ausführungsform weist hierbei das hülsenförmige Betätigungsglied im Bereich des Betätigungskolbens einen äußeren Vorsprung auf, an dem das eine Ende der als Schraubenfeder ausgebildeten und die Klemmbacken umgebenden Feder anliegt, deren anderes Ende sich an einem inneren Absatz des Gehäuses als Widerlager abstützt.

Um ein Verkanten oder Kippen des hülsenförmigen Betätigungsgliedes zu vermeiden, kann in vorteilhafter Weiterbildung der Erfindung ein zusätzlicher Schutzring vorhanden sein, dessen Außenseite an der Innenseite des Gehäuses geführt ist und der mit einem nach innen vorspringenden Bund versehen ist, der zwischen dem einen Ende der Schraubenfeder und dem äußeren Vorsprung des hülsenförmigen Betätigungsgliedes angeordnet ist.

Um ein problemloses Kippen der Klemmbacken zuzulassen, weist die Sackbohrung mit Vorteil eine erfindungsgemäße Hinterschneidung unter Bildung des Kipplagers an deren Kante (am Beginn derselben) auf, wodurch sich ein problemloses, spielfreies Kippen der Klemmbacken ergibt. Dabei ist vorausgesetzt, daß das eine freie Ende des Klemmbackens auf derselben einen Seite des Hebelarms des Klemmbackens wie dessen Klemmbereich bezüglich des Kipplagers jeweils angeordnet ist. Zur Erzielung großer Hebelübersetzungen weist erfindungsgemäß der Klemmbereich der Klemmbacken bezüglich des Kipplagers einen möglichst geringen Hebelarm auf.

Weitere zweckmäßige Ausgestaltungen und Weiterbildungen der Erfindung sind in den Unteransprüchen gekennzeichnet.

Ein bevorzugtes Ausführungsbeispiel der Erfindung wird nachfolgend unter Bezugnahme auf die Zeichnung näher erläutert. In dieser zeigt:
- Figur 1: eine Ausführungsform der erfindungsgemäßen Feststelleinrichtung in Klemmlage und im schematischen Querschnitt;
- Figur 2: die Feststelleinrichtung gemäß Fig. 1, in Freigabelage (Lösen mit Druck); und
- Figur 3: einen Schnitt III-III gemäß Fig. 1.

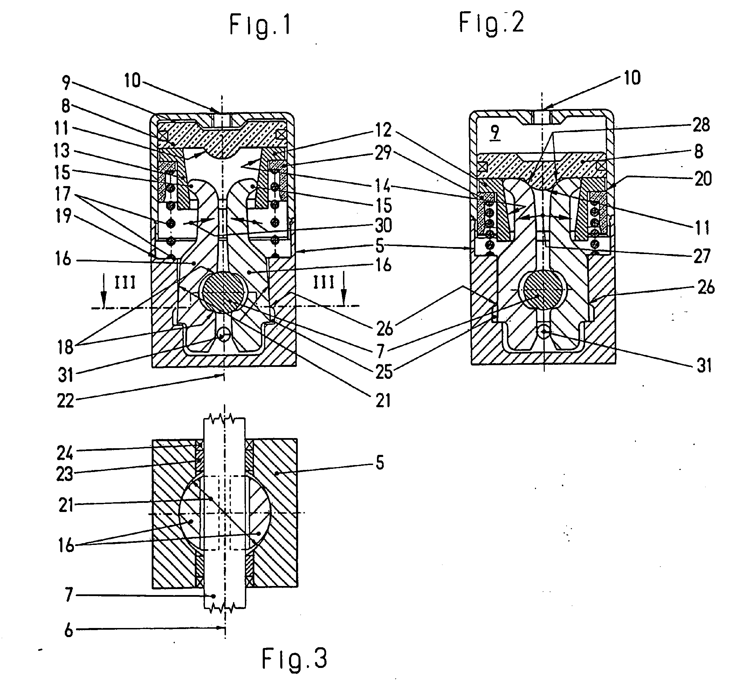

Die in Fig. 1 dargestellte Feststelleinrichtung wird exemplarisch in dieser Figur beschrieben. Die in den anderen Figuren nicht beschriebenen, aber mit demselben Bezugszeichen wie in Fig. 1 versehenen Teile stellen identische Teile dar. Die Feststelleinrichtung dient zum Feststellen einer eine gegebene Achsrichtung 6 (Fig. 3) aufweisende Achse 7. Es ist mit einem Gehäuse 5 versehen. Im Inneren ist ein Betätigungskolben 8 vorgesehen unter Bildung eines Kolbenraumes 9, in den ein insgesamt mit 10 bezeichneter Fluidanschluß, vorzugsweise für Druckluft mündet. Auf der dem Kolbenraum 9 abgewandten Seite ist der Betätigungskolben 8 ein Vorsprung 11 vorgesehen.

Auf derselben Seite wie der Vorsprung 11 ist der Betätigungskolben 8 im übrigen eben ausgebildet. An diesem ebenen Bereich liegt ein hülsenförmiges Betätigungsglied 13 mit einem äußeren Vorsprung 12 rückseitig an. Dieses hülsenförmige Betätigungsglied 13 weist als abgeschrägte Steuerflächen eine konische Innenfläche 14, deren Durchmesser sich in Richtung auf den Betätigungskolben 8 vergrößert.

An dieser konischen Innenfläche 14 des hülsenförmigen Betätigungsgliedes 13 sind die freien Enden 15 der beiden insgesamt mit 16 bezeichneten Klemmbacken geführt, so daß sie in der in Fig. 1 gezeichneten (druckfreien) Lage von der Kraft einer als Schraubenfeder ausgebildeten Feder in die gezeichnete Feststellage gedrückt werden, in der sie mit ihrem Klemmbereich 18 an der Oberfläche der Achse 7 klemmend zur Anlage kommen, wobei sich die Feder einerseits auf einem inneren Absatz 19 des Gehäuses 5 und mit ihrer anderen Seite sich im Bereich des äußeren Vorsprungs 12 des hülsenförmigen Betätigungsgliedes 13 abstützt.

Damit sichergestellt ist, daß das hülsenförmige Betätigungsglied 13 nicht kippen kann, ist weiterhin ein insgesamt mit 29 bezeichneter Stützring vorgesehen, der mit seinem äußeren (zylindermantelförmigen) Bereich entlang der Innenseite des Gehäuses geführt ist und der einen nach innen vorspringenden Bund 20 aufweist, der sich zwischen dem äußeren Vorsprung 12 des hülsenförmigen Betätigungsgliedes 13 und dem einen Ende der Schraubenfeder 17 angeordnet ist.

Im Gehäuse 5 ist in dem vom Betätigungskolben 8 abgewandten Bereich eine im wesentlichen senkrecht zu der Achsrichtung 6 verlaufende Bohrung, vorzugsweise Sackbohrung 21 vorgesehen (Fig. 3), wobei die Klemmbacken 16 im Bereich des Sackloches 21 an dessen Form angepaßt sind, also im senkrecht zu der Achse der Sackbohrung 21 verlaufenden Querschnitt eine äußere Begrenzung in Form eines Kreisbogens aufweisen. Wirkt demnach im geklemmten Zustand in Achsrichtung 6 der Achse 7 eine Kraft, so werden die die Achse 7 klemmenden Klemmbacken 16 etwas in Achsrichtung bewegt. Infolge dessen kommen sie in einen Bereich kleineren Durchmessers der Sackbohrung 21, wodurch wiederum der nach innen gerichtete resultierende Druck auf die Achse 7 vergrößert wird. Letztendlich gibt sich hieraus eine Selbsthemmung, wodurch die Feststelleinrichtung auch gegen hohe Verstellkräfte in Achsrichtung 6 der Achse 7 hinreichend zuverlässig klemmt.

Zusätzlich kann das im Querschnitt rechteckförmige oder quadratische Gehäuse 5 mit zusätzlichen Führungsringen 23 und/oder Dichtungen 24 im Bereich des Auslasses für die Achse 7 versehen sein, wodurch sich auch eine Abdichtung gegen Verschmutzung im Inneren des Gehäuses 5 der Feststelleinrichtung ergibt.

Damit eine ungestörte Kippbewegung der Klemmbacken 16 möglich ist und überdies ein genaues Kipplager definiert wird, weist die Sackbohrung 21 im Bereich unterhalb des Klemmbereiches 18 für die Achse 7 eine Hinterschneidung 25 unter Bildung eines Kipplagers 26 an der dadurch gebildeten Kante zu der Sackbohrung 21 auf, wobei sowohl der Klemmbereich 18 als auch die freien Enden 15 der Klemmbacken 16 auf derselben Seite des Hebelarms mit Bezug auf das Kipplager 26 angeordnet ist.

Wird der Kolbenraum 9 über den Anschluß 10, z.B. mit Druckluft betätigt, so wird der Betätigungskolben 8, wie in Fig. 2 gezeigt, dort nach unten bewegt, wobei die freien Enden 15 der beiden Klemmbacken gemäß Richtungspfeil 27 voneinander wegbewegt werden, wodurch auch der Klemmbereich 18 von der Achse 7 freikommt. Um dies mit Sicherheit zu bewirken, greift der Vorsprung 11 des Betätigungskolbens 8 zwischen die freien Enden 15 der Klemmbacken 16, die in diesem Bereich eine schräge Anlauffläche 28 aufweisen, wodurch die Klemmbacken 16 zwangszweise voneinander wegbewegt werden unter Freigabe der Achse 7 (Lösen mit Druck). Wird der Kolbenraum 9 entlüftet, so wird aufgrund der Kraft der Schraubenfeder 17 der Betätigungskolben 8 in die in Fig. 1 gezeichnete Lage unter gleichzeitiger Klemmung der Achse 7 mit dem Klemmbereich 18 der Klemmbacken 16 bewegt.

## Patentansprüche

1. Feststelleinrichtung zum Feststellen zumindest einer eine gegebene Achsrichtung (6) sowie einen gegebenen Durchmesser aufweisenden Achse (7), beispielsweise mit mindestens einer fest angeordneten Stange oder mit mindestens einer sich drehenden Welle, mit mindestens zwei entgegen der Kraft mindestens einer Feder (17) betätigbaren Klemmbacken (16), die in einem Gehäuse (5) angeordnet sind, mit mindestens einem über ein Fluid in einem Kolbenraum (9) betätigbaren Betätigungskolben (8), mit mindestens einem von diesem bewegbaren Betätigungsglied (13) zum Angriff an dem einen freien Ende (15) der Klemmbacken (16) und zu deren Bewegung voneinander weg (27) oder aufeinander zu um mindestens ein den Klemmbacken (16) zugeordnetes Kipplager (26) von einer Feststellage in eine Freigabelage für die Achse (7) und mit einem Klemmbereich (18) zum kraftschlüssigen Angriff an der Achse (7) in der Feststellage im Bereich des Kipplagers (26) der Klemmbacken (16), wobei sich die Kippachse des Kipplagers (26) im wesentlichen parallel zur Achsrichtung (6) der Achse (7) erstreckt und der Klemmbereich (18) in der Feststellage zur flächig, linienförmig und/oder punktuell klemmenden Anlage an der Oberfläche der Achse (7) unter gleichzeitiger spielfreier Klemmung bzw. Zentrierung ausgebildet ist, **dadurch gekennzeichnet, dass** auf der vom Kolbenraum (9) abgewandten Seite des Betätigungskolbens (8) in dem Gehäuse (5) eine im wesentlichen rechtwinklig zur Achsrichtung (6) der Achse (7) verlaufende Bohrung, vorzugsweise Sackbohrung (21) ausgebildet ist und dass die Klemmbacken (16) in diesem Bereich mit dem Klemmbereich (18) versehen sind sowie im senkrecht zu deren Bohrachse (22) verlaufenden Querschnitt eine äussere Begrenzung in Form eines Bogens aufweisen, so dass die Klemmbacken (16) im geklemmten Zustand bei axialer Belastung der Feststelleinrichtung mit ihrer Rückseite an der inneren Wandung der Sackbohrung (21) rechtwinklig zu deren Erstreckung in Achsrichtung (6) der Achse (7) etwas längs des Bogens unter Bewirkung einer zusätzlichen nach innen gerichteten resultierende Kraft auf die Klemmbacken (16) bewegt werden.

2. Einrichtung nach Anspruch 1, **dadurch gekennzeichnet, daß** der Bogen ein Kreisbogen und der Durchmesser der Sackbohrung (21) jenem des Kreisbogens entspricht.

3. Einrichtung nach Anspruch 1 oder 2, **dadurch gekennzeichnet, daß** die Sackbohrung (21) eine Hinterschneidung (25) unter Bildung des Kipplagers (26) aufweist.

4. Einrichtung nach einem der Ansprüche 1 bis 3, **dadurch gekennzeichnet, daß** das eine freie Ende (15) und der Klemmbereich (18) der Klemmbacken (16) jeweils auf derselben einen Seite des Hebelarms des Klemmbackens bezüglich des Kipplagers (26) angeordnet ist.

5. Einrichtung nach Anspruch 4, **dadurch gekennzeichnet, daß** der Klemmbereich (18) der Klemmbacken (16) bezüglich des Kipplagers (26) einen möglichst geringen Hebelarm aufweist.

6. Einrichtung nach einem der Ansprüche 1 bis 5, **dadurch gekennzeichnet, daß** das Betätigungsglied (13) als Hülse ausgebildet ist und in deren inneren Bereich abgeschrägte Steuerflächen (14) aufweist und daß diese mit den freien Enden (15) der Klemmbacken (16) zusammenwirken.

7. Einrichtung nach Anspruch 6, **dadurch gekennzeichnet, daß** die abgeschrägten Steuerflächen von einer konischen Innenfläche (14) des Betätigungsgliedes (13) gebildet sind, deren Durchmesser sich in Richtung auf den Betätigungskolben (8) vergrößert.

8. Einrichtung nach Anspruch 6 oder 7, **dadurch gekennzeichnet, daß** das hülsenförmige Betätigungsglied (13) im Bereich des Betätigungskolbens (8) einen äußeren Vorsprung (12) aufweist, an der das eine Ende einer als Schraubenfeder (17) ausgebildeten und die Klemmbacken (16) umgebenden Feder anliegt, und daß deren anderes Ende sich an einem inneren Absatz (19) des Gehäuses (5) als Widerlager abstützt.

9. Einrichtung nach einem der Ansprüche 1 bis 8, **dadurch gekennzeichnet, daß** ein Stützring (29) vorgesehen ist, dessen zylindermantelförmige Außenfläche an der Innenseite des Gehäuses (5) geführt ist und dessen Innenseite die Schraubenfeder (17) von außen umgibt und daß dieser Stützring (29) an seinem dem Betätigungskolben (8) nahen Ende einen nach innen vorspringenden Bund (20) aufweist, der zwischen dem einen Ende der Schraubenfeder (17) und dem äußeren Vorsprung (12) des Betätigungsgliedes (13) angeordnet ist.

10. Einrichtung nach einem der Ansprüche 1 bis 9, **dadurch gekennzeichnet, daß** das hülsenförmige Betätigungsglied (13) oder der Betätigungskolben (8) auf der den Klemmbacken (16) zugewandten Seite einen Vorsprung (11) zum Angriff zwischen den Klemmbacken (16) zu deren Auseinanderbewegen (27) im Sinne des Lösens vorgesehen ist.

11. Einrichtung nach Anspruch 10, **dadurch gekennzeichnet, daß** die Klemmbacken in ihrem Inneren, sich einander zu gewandten Bereich an ihrem freien Ende (15) für den Vorsprung (11) eine Schrägfläche (28) aufweisen.

12. Einrichtung nach einem der Ansprüche 1 bis 11, **dadurch gekennzeichnet, daß** bezüglich des Kipplagers (26) auf der anderen Seite der freien Enden (15) der Klemmbacken (16) ein parallel zu der Achse (7) verlaufender Stift (31) vorgesehen ist.

13. Einrichtung nach Anspruch 12, **dadurch gekennzeichnet, daß** der Stift (31) aus einem elastisch nachgiebigen Werkstoff, z.B. Gummi besteht.

## Claims

1. Locking device for locking at least one axle (7) providing a given axle direction (6) and a given diameter, for example, with at least one rigidly-mounted rod or with at least one rotating shaft, with at least two clamping jaws (16) disposed within a housing (5), which are capable of being activated against the force of at least one spring (17), with at least one activation piston (8) capable of being activated via a fluid in a piston chamber (9), with at least one activation element (13) capable of being moved by the latter in order to engage at the one free end (15) of the clamping jaws (16) and in order to move the latter away from one another (27) or towards one another from a locking position into a release position for the axle (7) about at least one tilting bearing (26) allocated to the clamping jaws (16),
and with a clamping region (18) in the region of the tilting bearing (26) of the clamping jaws (16) for the force-fit engagement with the axle (7) in the locking position,
wherein the tilting axle of the tilting bearing (26) extends substantially parallel to the axle direction (6) of the axle (7), and, in the locking position, the clamping region (18) is designed for surface, linear and/or point clamping-contact on the surface of the axle (7) with simultaneous, play-free clamping and/or centring,
**characterised in that**
a borehole, preferably a blind borehole (21), extending substantially at right angles to the axial direction (6) of the axle (7), is formed in the housing (5) at the end of the activation piston (8) facing away from the piston chamber (9),
and that the clamping jaws (16) are provided with the clamping region (18) in this region and provide an outer limit in the shape of a curve in the cross-section extending perpendicular to the borehole axis (22), so that, in the clamped condition, in the event of an axial loading of the locking device, the clamping jaws (16) are moved somewhat along the curve with their rear side against the internal wall of the blind borehole (21) at right angles to its extension in the axial direction (6) of the axle (7) thereby achieving an additional resultant force directed inwards on the clamping jaws (16).

2. Device according to claim 1,
**characterised in that**
the curve is a circular curve, and the diameter of the blind borehole (21) corresponds to that of the circular curve.

3. Device according to claim 1 or 2,
**characterised in that**
the blind borehole (21) provides an undercut (25) thereby forming the tilting bearing (26).

4. Device according to any one of claims 1 to 3,
**characterised in that**
the one free end (15) and the clamping region (18) of the clamping jaws (16) are disposed respectively at the same end of the lever arm of the clamping jaw relative to the tilting bearing (26).

5. Device according to claim 4,
**characterised in that**
the clamping region (18) of the clamping jaws (16) provides the smallest possible lever arm relative to the tilting bearing (26).

6. Device according to any one of claims 1 to 5,
**characterised in that**
the activation element (13) is designed as a sleeve and, in its interior region, provides bevelled control surfaces (14), and that these cooperate with the free ends (15) of the clamping jaws (16).

7. Device according to claim 6,
**characterised in that**
the bevelled control surfaces are formed by a conical internal surface (14) of the activation element (13), of which the diameter increases in the direction towards the activation piston (8).

8. Device according to claim 6 or 7,
**characterised in that**,
in the region of the activation piston (8), the sleeve-shaped activation element (13) provides an outer projection (12), on which the one end of a spring, formed as a helical spring (17) and surrounding the clamping jaws (16), is supported, and that its other end is supported against an internal shoulder (19) of the housing (5) as a counter bearing.

9. Device according to any one of claims 1 to 8,
**characterised in that**
a supporting ring (29) is provided, of which the external cylindrical surface is guided on the inner side of the housing (5), and of which the internal side surrounds the helical spring (17) from the outside, and that, at its end close to the activation piston (8), this supporting ring (29) provides a band (20) projecting towards the inside, which is disposed between the one end of the helical spring (17) and the outer projection (12) of the activation element (13).

10. Device according to any one of claims 1 to 9,
**characterised in that**,
on the side facing towards the clamping jaws (16), the sleeve-shaped activation element (13) or the activation piston (8) provides a projection (11) for engagement between the clamping jaws (16) in order to move the latter apart (27) thereby releasing the locking.

11. Device according to claim 10,
**characterised in that**
the clamping jaws provide a sloping surface (28) for the projection (11) in the internal, mutually-facing region at their free ends (15).

12. Device according to any one of claims 1 to 11,
**characterised in that**
a pin (31) extending parallel to the axle (7) is provided at the other end relative to the free ends (15) of the clamping jaws (16) with reference to the tilting bearing (26).

13. Device according to claim 12,
**characterised in that**
the pin (31) is made of a resilient, flexible material, for example, rubber.

## Revendications

1. Dispositif de fixation permettant de fixer au moins un axe (7) présentant une direction axiale (6) donnée ainsi qu'un diamètre donné, comportant par exemple au moins une barre disposée de manière fixe ou au moins un arbre rotatif, au moins deux mâchoires de serrage (16) pouvant être actionnées à l'encontre de la force d'au moins un ressort (17), qui sont disposées dans un boîtier (5), comportant au moins un piston d'actionnement (8) pouvant être actionné par l'intermédiaire d'un fluide présent dans un espace de compression (9), et comportant au moins un organe d'actionnement (13) pouvant être déplacé par celui-ci, devant s'engager sur une extrémité libre (15) des mâchoires de serrage (16) et provoquer leur déplacement en s'éloignant l'une de l'autre (27) ou en se rapprochant l'une de l'autre autour d'au moins un appui oscillant (26) associé à au moins l'une des mâchoires de serrage (16), en partant d'une position de fixation pour parvenir à une position de libération pour l'axe (7), et avec une zone de serrage (18) permettant l'engagement par conjugaison de forme sur l'axe (7) dans la position de fixation dans la zone de l'appui oscillant (26) des mâchoires de serrage (16), moyennant quoi l'axe d'oscillation de l'appui oscillant (26) s'étend sensiblement parallèlement à la direction axiale (6) de l'axe (7) et la zone de serrage (18), dans la position de fixation, est configurée de manière à se positionner de manière plane, linéaire et/ou en assurant ponctuellement un serrage, sur la surface de l'axe (7) avec un centrage ou serrage sans jeu simultané, **caractérisé en ce que**, sur la face opposée à l'espace de compression (9) du piston d'actionnement (8), dans le boîtier (5), est configuré un alésage s'étendant sensiblement perpendiculairement à la direction axiale (6) de l'axe (7), de préférence un alésage borgne (21), et **en ce que** les mâchoires de serrage (16) sont dotées de la zone de serrage (18) dans cette zone et présentent, dans la section s'étendant perpendiculairement à leur axe d'alésage (22), une délimitation externe sous la forme d'un arc, de telle sorte que les mâchoires de serrage (16), à l'état serré, lors d'une sollicitation axiale du dispositif de fixation, se déplacent avec leur face arrière sur la paroi interne de l'alésage borgne (21), perpendiculairement à leur étendue dans la direction axiale (6) de l'axe (7), quasiment le long de l'arc en générant une force supplémentaire résultante, orientée vers l'intérieur, sur les mâchoires de serrage (16).

2. Dispositif selon la revendication 1, **caractérisé en ce que** l'arc est un arc de cercle et le diamètre de l'alésage borgne (21) correspond à celui de l'arc de cercle.

3. Dispositif selon la revendication 1 ou 2, **caractérisé en ce que** l'alésage borgne (21) présente une contre-dépouille (25) en formant l'appui oscillant (26).

4. Dispositif selon l'une quelconque des revendications 1 à 3, **caractérisé en ce qu'**une extrémité libre (15) et la zone de serrage (18) des mâchoires de serrage (16) sont disposées respectivement sur une même face du bras de levier de la mâchoire de serrage par rapport à l'appui oscillant (26).

5. Dispositif selon la revendication 4, **caractérisé en ce que** la zone de serrage (18) des mâchoires de serrage (16) par rapport à l'appui oscillant (26) présente un bras de levier le plus petit possible.

6. Dispositif selon l'une quelconque des revendications 1 à 5, **caractérisé en ce que** l'organe d'actionnement (13) est configuré sous la forme d'une douille et présente, dans sa zone interne, des surfaces de commande biseautées (14), et **en ce que** celles-ci coopèrent avec les extrémités libres (15) des mâchoires de serrage (16).

7. Dispositif selon la revendication 6, **caractérisé en ce que** les surfaces de commande biseautées sont formées par une surface interne conique (14) de l'organe d'actionnement (13), dont le diamètre augmente en direction du piston d'actionnement (8).

8. Dispositif selon la revendication 6 ou 7, **caractérisé en ce que** l'organe d'actionnement (13) sous forme de douille présente, dans la zone du piston d'actionnement (8), une saillie externe (12) sur laquelle repose une extrémité d'un ressort configuré sous forme de ressort hélicoïdal (17) et entourant les mâchoires de serrage (16), et **en ce que** son autre extrémité repose sur un dénivellement interne (19) du boîtier (5) sous la forme de contre-appui.

9. Dispositif selon l'une quelconque des revendications 1 à 8, **caractérisé en ce qu'**une bague d'appui (29) est prévue, dont la surface externe en forme d'enveloppe cylindrique est guidée sur la face interne du boîtier (5) et dont la face interne entoure le ressort hélicoïdal (17) de l'extérieur, et **en ce que** cette bague d'appui (20) présente, sur son extrémité proche du piston d'actionnement (8), un collet en saillie vers l'intérieur, qui est disposé entre une extrémité du ressort hélicoïdal (17) et la saillie externe (12) de l'organe d'actionnement (13).

10. Dispositif selon l'une quelconque des revendications 1 à 9, **caractérisé en ce que** l'organe d'actionnement sous forme de douille (13) ou le piston d'actionnement (8) présente, sur la face orientée vers les mâchoires de serrage (16), une saillie (11) permettant l'engagement entre les mâchoires de serrage (16) afin d'assurer un éloignement (27) l'une par rapport à l'autre dans le sens d'un détachement.

11. Dispositif selon la revendication 10, **caractérisé en ce que** les mâchoires de serrage présentent, dans leur zone interne, où elles sont orientées l'une vers l'autre, au niveau de leur extrémité libre (15), une surface oblique (28) pour la saillie (11).

12. Dispositif selon l'une quelconque des revendications 1 à 11, **caractérisé en ce que**, par rapport à l'appui oscillant (26), sur l'autre face des extrémités libres (15) des mâchoires de serrage (16) est prévue une goupille (31) s'étendant parallèlement à l'axe (7).

13. Dispositif selon la revendication 12, **caractérisé en ce que** la goupille (31) est réalisée dans une matière élastique déformable, par exemple du caoutchouc.
